(19) Europäisches Patentamt
European Patent Office
Office européen des brevets

(11) **EP 3 334 121 B1**

(12) **FASCICULE DE BREVET EUROPEEN**

(45) Date de publication et mention
de la délivrance du brevet:
**26.07.2023 Bulletin 2023/30**

(21) Numéro de dépôt: **17205943.8**

(22) Date de dépôt: **07.12.2017**

(51) Classification Internationale des Brevets (IPC):
**H04L 9/32** *(2006.01)* **H04L 9/40** *(2022.01)*
**H04L 9/06** *(2006.01)*

(52) Classification Coopérative des Brevets (CPC):
**H04L 63/123; H04L 9/0643; H04L 9/3218;**
**H04L 2209/30**

(54) **PROCÉDÉ DE GÉNÉRATION D'UNE SIGNATURE ÉLECTRONIQUE D'UN DOCUMENT ASSOCIÉ À UN CONDENSAT**

EIN PROZESS ZUR ERZEUGUNG EINER ELEKTRONISCHEN SIGNATUR EINES DOKUMENTS, DAS ZU EINEM DIGEST VERBUNDEN IST

PROCESS OF GENERATING AN ELECTRONIC SIGNATURE OF A DOCUMENT ASSOCIATED TO A DIGEST

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.12.2016 FR 1662089**

(43) Date de publication de la demande:
**13.06.2018 Bulletin 2018/24**

(73) Titulaire: **Idemia Identity & Security France**
**92400 Courbevoie (FR)**

(72) Inventeurs:
• **KEUFFER, Julien, Paul**
**92130 Issy Les Moulineaux (FR)**
• **CHABANNE, Hervé**
**92130 Issy Les Moulineaux (FR)**
• **PROUFF, Emmanuel**
**92130 Issy Les Moulineaux (FR)**
• **CLEMOT, Olivier**
**92130 Issy Les Moulineaux (FR)**

(74) Mandataire: **Idemia**
**2, place Samuel de Champlain**
**92400 Courbevoie (FR)**

(56) Documents cités:
**EP-A1- 3 010 177**

• **Brandon Jia Lum ET AL: "Implementing Zero-Knowledge Authentication with Zero Knowledge (ZKA_wzk)", , 31 décembre 2010 (2010-12-31), pages 1-19, XP055374859, The Python Papers Monograph 2: 9 Proceedings of PyCon Asia-Pacific 2010 -1 Extrait de l'Internet: URL:http://ojs.pythonpapers.org/index.php/ tppm/article/view/155 [extrait le 2017-05-22]**
• **Wikipedia: "Signature numérique - Wikipédia", , 14 novembre 2016 (2016-11-14), pages 1-7, XP055374886, Extrait de l'Internet: URL:https://fr.wikipedia.org/w/index.php?t itle=Signature_numérique&oldid=131807019 [extrait le 2017-05-22]**
• **MARINA BLANTON: "Online subscriptions with anonymous access", PROCEEDINGS OF THE 2008 ACM SYMPOSIUM ON INFORMATION, COMPUTER AND COMMUNICATIONS SECURITY , ASIACCS '08, ACM PRESS, NEW YORK, NEW YORK, USA, 18 March 2008 (2008-03-18), pages 217-227, XP058092555, DOI: 10.1145/1368310.1368342 ISBN: 978-1-59593-979-1**
• **Unknown: "Fiat-Shamir heuristic", , 12 June 2016 (2016-06-12), pages 1-2, XP55746807, Retrieved from the Internet: URL:https://en.wikipedia.org/wiki/Fiat-Sha mir_heuristic [retrieved on 2020-11-04]**

**Description**

DOMAINE TECHNIQUE GENERAL

La présente invention concerne le domaine de l'authentification, et en particulier un procédé de signature électronique d'un document confidentiel.

ETAT DE L'ART

La signature électronique d'un document électronique permet de garantir l'intégrité du document, d'en authentifier l'auteur, et ce de façon définitive (non-répudiation), par analogie avec la signature manuscrite d'un document papier.

Il est courant pour un émetteur de document de sous-traiter la génération de la signature électronique à un prestataire, appelé le Fournisseur de Solution de Signature (FSS). En effet, le procédé de signature électronique doit, pour être officiellement valide, être certifié par une autorité compétente, ce qui est le cas du FSS (l'implémentation de cette primitive cryptographique nécessaire à la signature demande en effet des compétences spécifiques, avec un stockage sécurisé de clé secrète délicat à réaliser en pratique). A cette fin, le client (l'émetteur du document) charge le document sur un serveur du FSS pour que ce dernier appose la signature.

En pratique, la signature électronique ne s'effectue pas sur le document complet mais sur un condensat de celui-ci (appelé également « empreinte cryptographique » ou « haché » du document, de l'anglais « hash »), obtenu en appliquant une fonction de hachage cryptographique au document. Le condensat a une taille fixe et on applique la primitive de signature à un élément qui est construit à partir de ce condensat. De plus, le condensat ne révèle rien sur le document : on ne peut pas retrouver le document d'origine à partir de ce condensat, en tout cas tant que la fonction de hachage utilisée est considérée comme sûre. On peut cependant recalculer le condensat à partir du message pour vérifier qu'il est correct.

Si le document à signer contient des informations sensibles, le client peut ne pas vouloir le dévoiler à son fournisseur de signature électronique. Dans la mesure où seul le condensat est nécessaire pour générer la signature d'un document, on pourrait envisager que le client puisse ne transmettre au FSS qu'un condensat du message.

Mais cela est aujourd'hui inenvisageable : puisqu'on ne peut pas retrouver le document original à partir de son condensat, le FSS devrait produire une signature d'un document qu'il n'a pas vu. Or, le fait de produire une signature l'engage d'un point de vue légal, d'où le refus actuel de tout FSS de générer une signature électronique s'il n'a pas accès au document (un client malhonnête pourrait fournir le condensat d'un document qui n'est pas de lui pour s'en attribuer la paternité).

En résumé, aujourd'hui l'émetteur d'un document confidentiel qui veut qu'une signature soit générée pour ce document ne peut que :

- Soit fournir le document en clair à un FSS et lui faire confiance ;
- Soit générer la signature tout seul mais il est nécessaire de disposer de compétence spécifiques, d'être certifié par une autorité et de fournir soi-même la puissance de calcul.

On note qu'on connait des mécanismes de signature électronique dite aveugle, permettant de signer un document qui a été masqué (le masque pouvant être retiré après la génération de la signature), afin que le signataire ne puisse prendre connaissance de son contenu. Ce mécanisme est très utilisé dans les protocoles de vote électronique ou de monnaie virtuelle, mais s'avère inutile pour résoudre le présent problème : le document masqué pourrait certes être transmis au FSS sans violer la confidentialité, mais ce dernier n'accepterait toujours pas de générer la signature faute de pouvoir vérifier que le condensat correspond bien à ce document masqué. De surcroît, la signature obtenue après démasquage n'est pas une signature standard au sens des normes ISO ou du NIST. On note aussi que le document de Marina Blanton: "Online subscriptions with anonymous access",Proceedings of the 2008 ACM Symposium on Information, Computer and Communications Security, ASIACCS '08, ACM Press, New York, USA, 18 mars 2008 (2008-03-18), pages 217-227, DOI: 10.1145/1368310.1368342ISBN: 978-1-59593-979-1, est aussi un document d'art antérieur pertinent.

Il serait par conséquent souhaitable de disposer d'une solution permettant aux émetteurs de document de continuer à déléguer la génération de signature à des FSS avec le même niveau de sécurité et de fiabilité tout en éliminant la nécessité de transmettre le document en clair, et ce de façon rapide et efficace.

PRESENTATION DE L'INVENTION

L'invention est définie par les revendications indépendantes.

Selon un premier aspect, la présente invention concerne un procédé de génération d'une signature électronique d'un document associé à un condensat obtenu par une fonction de hachage donnée comprenant la mise en oeuvre par des moyens de traitement de données d'un serveur d'étapes de :

(a) Réception dudit condensat et d'une preuve à divulgation nulle de connaissances du fait que ledit condensat est bien le résultat de l'application de ladite fonction de hachage donnée audit document ;
(b) Vérification que ladite preuve à divulgation nulle de connaissances est valide ;
(c) génération d'une signature électronique du document à partir dudit condensat.

Selon d'autres caractéristiques avantageuses et non limitatives :

- l'étape (c) comprend l'application au condensat d'une fonction paramétrée par une clé privée d'un émetteur du document ;
- la preuve à divulgation nulle de connaissances est un objet cryptographique de type zkSNARK ;
- ladite fonction de hachage donnée est une fonction de hachage cryptographique itérant une fonction de compression suivant le principe de Merkle-Damgård ;
- ladite fonction de hachage donnée est choisie parmi les fonctions des familles SHA-1 et SHA-2 ;
- ladite preuve à divulgation nulle de connaissances du fait que ledit condensat est bien le résultat de l'application de ladite fonction de hachage donnée audit document est une preuve à divulgation nulle de connaissances du fait que l'équipement 10a dispose d'une pré-image telle que ledit condensat est bien le résultat de l'application d'une itération de la fonction de compression à ladite pré-image ;
- le procédé comprend une étape préalable (a0) de génération, par des moyens de traitement de données d'un équipement disposant dudit document, de ladite preuve à divulgation nulle de connaissances du fait que ledit condensat est bien le résultat de l'application de ladite fonction de hachage donnée audit document ;
- l'étape (a0) comprend en outre la génération préalable dudit condensat par application de ladite fonction de hachage donnée audit document ;
- l'étape (c) comprend la transmission de la signature électronique générée auxdits moyens de traitement de données de l'équipement ;
- le procédé comprend une étape subséquente (d) d'association par les moyens de traitement de données de l'équipement de la signature électronique au document de sorte à former le document signé ;
- l'étape (a0) comprend la réception préalable par les moyens de traitement de l'équipement d'un nonce, et la génération d'un condensat d'une concaténation du document et du nonce complété par un bloc de bourrage ;
- l'étape (a) comprend la réception du nonce complété par un bloc de bourrage, et dudit condensat d'une concaténation du document et du nonce complété par le bloc de bourrage ;
- ladite preuve à divulgation nulle de connaissances du fait que l'équipement dispose d'une pré-image telle que ledit condensat est bien le résultat de l'application d'au moins une itération de la fonction de compression à ladite pré-image, est une preuve à divulgation nulle de connaissances du fait que le condensat du document et le condensat de la concaténation du document et du nonce complété par le bloc de bourrage sont liés par une relation donnée ;
- ladite relation donnée entre le condensat du document et le condensat de la concaténation du document et du nonce complété par le bloc de bourrage est choisie parmi une pluralité de relations prédéterminées, l'étape (b) comprenant la détermination de ladite relation en fonction de la valeur reçue du nonce complété par le bloc de bourrage, et la vérification de la preuve en conséquence ;
- l'étape (a0) comprend la détermination du bloc de bourrage complétant le nonce et le choix de ladite relation donnée entre le condensat du document et le condensat de la concaténation du document et du nonce complété par le bloc de bourrage, en fonction de longueurs dudit document et/ou du nonce.

Selon un deuxième et un troisième aspect, l'invention propose un produit programme d'ordinateur comprenant des instructions de code pour l'exécution d'un procédé selon le premier aspect de génération d'une signature électronique d'un document associé à un condensat ; et un moyen de stockage lisible par un équipement informatique sur lequel un produit programme d'ordinateur comprend des instructions de code pour l'exécution d'un procédé selon le premier aspect de génération d'une signature électronique d'un document associé à un condensat.

PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

- la figure 1 est un schéma d'une architecture pour la mise en oeuvre des procédés selon l'invention ;

- la figure 2 illustre le principe de Merkle-Damgård.

DESCRIPTION DETAILLEE

*Architecture*

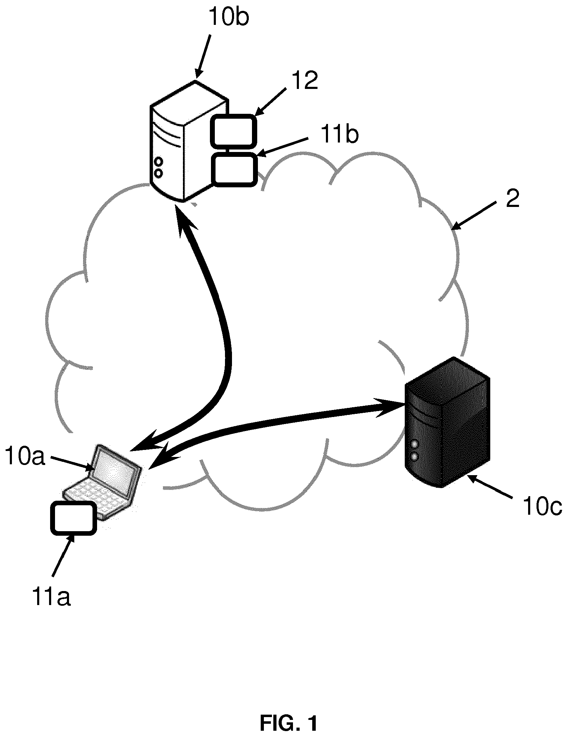

En référence à la **figure 1,** est proposé un procédé de génération d'une signature électronique d'un document mis en oeuvre au sein d'une architecture telle que représentée. Le document est associé à un condensat obtenu par une fonction de hachage donnée.

Comme expliqué, une fonction de hachage prend en entrée un message de taille arbitraire (le document original) et produit un condensat de taille fixe associé à ce message. Ici, ladite fonction de hachage donné est avantageusement une fonction dite cryptographique, c'est-à-dire avec des propriétés supplémentaires : le condensat est statistiquement bien réparti dans l'ensemble des valeurs d'arrivées, il est impossible en temps raisonnable de trouver deux messages qui ont le même condensat (résistance aux collisions) et on ne peut pas à partir du condensat retrouver un message qui a permis d'obtenir cette valeur (résistance au calcul de pré-image).

Les fonctions de hachage construites en utilisant le principe de Merkle-Damgård (dont on parlera plus tard), c'est-à-dire itérant une fonction dite de compression, sont des exemples de fonctions de hachage cryptographique qui sont avantageusement choisie pour le présent procédé. On prendra l'exemple des fonctions de la famille SHA (« Secure Hash Algorithm »), standardisées par le NIST (« National Institute of Standards and Technology »), en particulier les sous-familles SHA-1 ou SHA-2 (notamment SHA-256)

Le présent procédé est bien un procédé de « génération de signature électronique de document », et non « de signature d'un document ». Cela signifie qu'il permet seulement d'obtenir la signature électronique du document et pas encore le « document signé », i.e. l'association du document original et de la signature, généralement dans un conteneur quelconque.

Par « signature électronique » d'un document, on entend la définition classique de ce terme, à savoir une primitive cryptographique permettant d'identifier le signataire et garantissant que le document n'a pas été altéré depuis l'instant où la signature a été produite et est bien le document original (dans la suite de la présente description, on désignera comme « original » le document dont est réellement issu le condensat). Cet objet cryptographique consiste généralement en un chiffré du condensat du document grâce à une fonction de chiffrement asymétrique : le signataire utilise une clé privé, et tout le monde peut vérifier la signature grâce à une clé publique (en comparant le condensat contenu dans la signature et un condensat recalculé).

Plus précisément, les normes de signatures comme la norme PKCS#1 v2.2 imposent de signer un « résumé » de taille fixe du document, ce résumé étant obtenu à partir du condensat et de bourrage (padding) pour obtenir une taille prédéterminée. On notera que les données qui complètent le condensé du document ne dépendent pas du document lui-même.

De façon générale, on considérera dans la suite de la présente description que la signature électronique est construite à partir du condensat en utilisant une fonction connue de l'homme du métier, et dans un mode de réalisation préféré que la signature électronique est construite en modifiant de façon difficilement réversible le condensat, ce en appliquant une fonction paramétrée par la clé privée du signataire (ce type de fonction s'appelle fonction à trappe). Il faut aussi noter que selon les algorithmes de signatures utilisés, le condensat peut être complété avec du bourrage et du masquage (pour rendre la signature non déterministe). L'homme du métier pourra générer la signature à partir du condensat en utilisant les techniques de son choix.

Le présent procédé est essentiellement mis en oeuvre via un serveur 10b d'un FSS, équipé de moyens de traitement de données 11b (un ou plusieurs processeurs). Le serveur 10b peut en outre comprendre des moyens de stockage de données 12 (une mémoire) pour le stockage des divers objets cryptographiques impliqués.

Le serveur 10b peut être connecté en particulier via un réseau 2 tel qu'internet à un équipement 10a fournissant ledit document pour lequel générer la signature (mais ne transmettant que son condensat comme on va le voir). L'équipement 10a est ainsi typiquement un poste de travail d'un organisme émetteur de document, i.e. le signataire (client du FSS).

L'équipement 10a peut lui-même être connecté à d'autres serveurs 10c de tiers auxquels il pourra transmettre le document signé une fois que le serveur 10b lui aura envoyé la signature électronique générée.

*Procédé de génération de signature*

Le présent procédé de génération de signature électronique est mis en oeuvre par les moyens de traitement de données 11b du serveur 10b à partir d'une empreinte dudit document pour lequel on souhaite la signature.

Plus précisément, le serveur 10b va recevoir (de l'équipement 10a) le condensat du document original, mais pas le document lui-même qui peut rester confidentiel.

Et pourtant, le présent procédé rend possible de faire des opérations de signatures sur un condensat tout en ayant une garantie forte sur le fait que ce condensat soit bien lié à un document validement possédé par le client, en d'autre termes permet de signer un document original confidentiel sans avoir accès directement à ce document.

Pour cela, on utilise un protocole cryptographique générant une « preuve » que le condensat qui est à l'origine de la signature est bien lié à un document, cette preuve ne révélant rien d'autre que le fait que le document original est bien possédé par le producteur de la preuve.

Le protocole Pinocchio présenté dans la publication « Bryan Parno, Craig Gentry, Jon Howell, and Mariana Raykova, Pinocchio: Nearly Practical Vérifiable Computation, in Proceedings of the IEEE Symposium on Security and Privacy, IEEE, 21 May 2013 » a été un des premiers protocoles de calcul vérifiable permettant à l'exécutant de calculer de manière vérifiable l'application d'une fonction quelconque et au donneur d'ordre de vérifier la preuve associée en un temps de calcul inférieur à celui nécessaire pour réaliser le calcul lui-même.

Dans une première étape (a), les moyens de traitement de données 11b du serveur 10b du FSS (ne disposant pas du document original, et jouant le rôle de « vérifieur ») reçoivent ledit condensat et une preuve à divulgation nulle de connaissances du fait que ledit condensat est bien le résultat de l'application de ladite fonction de hachage donnée audit document original.

De façon préférée, cette étape est précédée par une étape préalable (a0) de génération, par les moyens de traitement de données 11a de l'équipement 10a du client (disposant dudit document original, et jouant le rôle de « prouveur »), de ladite preuve à divulgation nulle de connaissances du fait que ledit condensat est bien le résultat de l'application de ladite fonction de hachage donnée audit document

Plus précisément, ladite preuve à divulgation nulle de connaissances garantit l'affirmation suivante : « étant donné le condensat d'un document original reçu, l'équipement 10a dispose d'un document dont le condensat correspond à celui fourni ».

Cette étape (a0) comprend en outre préférentiellement la génération préalable dudit condensat par application de ladite fonction de hachage donnée audit document (comme expliqué typiquement des familles SHA-1 ou SHA-2, en particulier SHA-256).

Ainsi, on peut lier le condensat au document original mais on ne peut pas obtenir d'informations sur le contenu du document original. Le protocole cryptographique donne une preuve rapide à vérifier (moins d'une demi-seconde) et qu'on ne peut pas falsifier : il est quasi impossible (probabilité inférieure à $1/2^{80}$, voire inférieur à $1/2^{128}$ selon les paramètres choisis pour réaliser la preuve, celle-ci étant alors plus lente à réaliser) de faire accepter une preuve de l'affirmation ci-dessus si le processus ne s'est pas déroulé conformément à ce qui est spécifié.

Dans la réalisation de la preuve, le prouveur utilise la possibilité de réaliser des preuves à divulgation nulle de connaissance pour cacher le document original. Ainsi la preuve ne donne aucune information sur le document lui-même, si ce n'est que le condensat fourni est lié à ce document.

Dans tous les cas, dans une étape (b) les moyens de traitement de données 11b du serveur 10b vérifient que ladite preuve à divulgation nulle de connaissances est valide, et si c'est le cas ils génèrent la signature électronique du document à partir dudit condensat dans une étape (c). Comme expliqué, la génération de la signature de l'étape (c) consiste typiquement en l'application au condensat d'une fonction paramétrée par une clé privée d'un émetteur du document, le cas échéant complété avec d'autres éléments (bourrage et masquage).

La vérification d'une telle preuve à l'étape (b) n'est pas interactive (le vérifieur, i.e. le FSS n'a pas besoin de contacter le prouveur, i.e. le client) et se fait simplement en temps constant en vérifiant que la preuve est valide, ce qui démontre (à une probabilité infime près) au serveur 10b que la propriété prétendue est vraie, i.e. que le client dispose d'un document valide ayant pour condensat le condensat reçu. Il se convainc ainsi que le condensat qu'on lui a envoyé est licite malgré l'absence du document orignal.

Ainsi, dès lors que la preuve est vérifiée, le condensat seul est considéré suffisant pour qu'une signature puisse être générée sans risque d'usurpation.

Grâce à la preuve (sur laquelle on va revenir plus en détail par la suite), la confidentialité peut être totale (puisque la génération de la preuve ne nécessite pas de communication entre le client et le FSS) sans que FSS ne prenne de risque puisque la preuve lui garantit que le client dispose bien du message original.

La preuve est courte (voir très courte - de l'ordre de 300 octets - dans des modes de réalisation préférés qui vont être décrits plus loin), la transmettre avec le condensat du document ne pose aucun problème de bande passante. De plus, la vérification de cette preuve est rapide (en temps constant, quelques dizaines de millièmes de secondes), ce qui n'augmente pas la charge de calcul au niveau des moyens de traitement de données du serveur 10b du FSS. La génération de la preuve est quant à elle plus lourde en termes de temps de calcul, mais comme l'étape (a0) est mise en oeuvre du côté équipement 10a, ce temps de calcul additionnel est à la charge du client, qui prend en quelque sorte à sa charge le coût supplémentaire lié au besoin que le document reste confidentiel.

Ainsi le présent procédé est optimal aussi bien pour le client que pour le fournisseur de signature.

Additionnellement, l'étape (c) peut comprendre la transmission de la signature électronique générée auxdits moyens de traitement de données 11a de l'équipement 10a (en réponse à l'étape (a) qui constitue une requête de signature), de sorte à pouvoir mettre en oeuvre une étape subséquente (d) d'association par les moyens de traitement de données 11a de l'équipement 10a de la signature électronique au document de sorte à former le document signé. L'équipement 10a peut alors se prévaloir juridiquement de cette signature électronique auprès d'autres entités (serveurs 10c).

*Génération de preuve*

De façon préférée, ladite preuve à divulgation nulle de connaissances est un objet cryptographique de type zkSNARK.

zkSNARK signifie « zero-knowledge Succinct Non Interactive ARgument of Knowledge », i.e. Argument de connaissance non interactive à divulgation nulle de connaissances. Il s'agit d'une primitive cryptographique construite autour de la notion de preuve. Les chercheurs en informatique théorique et en cryptographie se sont intéressés depuis longtemps à la notion de preuve. Il existe des résultats théoriques permettant de produire une preuve très courte et sécurisée d'un algorithme mais le temps pour réaliser cette preuve est hors de portée et le restera malgré l'augmentation de la puissance de calcul des ordinateurs. Une des raisons tient au pouvoir que l'on donne à l'entité qui réalise la preuve, le prouveur. Dans les résultats théoriques sur les preuves, le prouveur a une puissance de calcul infinie et les preuves restent sécurisées malgré cela.

La notion de preuve a ensuite été relâchée, le protocole ne cherchant à se protéger que d'un prouveur qui aurait une puissance de calcul importante mais bornée. Le résultat du protocole n'est plus une preuve mais un argument. C'est à partir de cette notion d'argument que les systèmes pratiques de calcul vérifiables se sont construits. Une exigence supplémentaire dans un système produisant un argument est que cet argument soit non interactif : le vérifieur et le prouveur n'ont pas besoin d'interagir pour produire l'argument.

Depuis 2010, des réalisations de zkSNARKS ont été présentées : il s'agit d'arguments dont la taille est courte (quelques éléments d'une courbe elliptique), qui ne nécessitent pas d'interactivité et qui de plus permettent au prouveur d'effectuer une preuve à divulgation nulle de connaissance i.e. la preuve ne contient aucune information non triviale sur les entrées fournies par le prouveur.

Il existe plusieurs protocoles qui réalisent concrètement des zkSNARKs, et l'homme du métier pourra les utiliser indifféremment dans le présent procédé :

- Le protocole Pinocchio déjà évoqué ;
- Le protocole Gepetto, présenté dans la publication « Craig Costello, Cedric Fournet, Jon Howell, Markulf Kohlweiss, Benjamin Kreuter, Michael Naehrig, Bryan Parno, and Samee Zahur, Geppetto: Versatile Vérifiable Computation, in Proceedings of the IEEE Symposium on Security and Privacy, IEEE, 18 May 2015 », qui est une amélioration de Pinocchio
- Le protocole présenté dans la publication et suivantes « Eli Ben-Sasson, Alessandro Chiesa, Daniel Genkin, Eran Tromer, Madars Virza. SNARKs for C: Verifying Program Executions Succinctly and in Zéro Knowledge. In Proceedings of the 33rd Annual International Cryptology Conférence, CRYPTO '13, pages 90-108, 2013", implémenté open-source sous la forme d'une librairie appelée libsnark, optimisant le protocole produisant un zkSNARK dans Pinocchio en améliorant l'expressivité, c'est-à-dire le type de programmes ou d'algorithme qu'il est possible de vérifier.

Pour prendre l'exemple du protocole Pinocchio, ce protocole comporte plusieurs parties :

1. Un programme classique est traduit sous la forme d'un circuit arithmétique, c'est-à-dire d'un ensemble de relations entre les entrées et les sorties du programme traduites uniquement à l'aide d'additions et de multiplications d'éléments d'un corps fini. Il faut remarquer que tous les programmes peuvent en théorie être traduits sous cette forme mais qu'une partie seulement de ces programmes admet une traduction efficace sous forme de circuit.

2. Le circuit arithmétique obtenu est représenté efficacement à l'aide de trois familles de polynômes auxquelles s'ajoute un polynôme supplémentaire, appelé polynôme cible. Ces familles de polynômes forment des « Quadratic Arithmetic Programs » (QAPs). Elles encodent les relations entre les entrées et les sorties de chaque porte multiplicative du circuit, les relations des portes additives étant intégrées dans la première porte multiplicative qui suit dans le calcul.

Ces QAPs sont reliés au calcul vérifiable par le point suivant : un calcul $y = C(x)$ est correct pour une entrée $x$ si et seulement si toutes les relations décrivant le circuit arithmétique correspondant sont satisfaites en fixant comme valeur d'entrée $x$ et comme valeur de sortie $y$.

Les QAPs permettent en quelque sorte de compresser toutes les contraintes à vérifier dans une seule relations à vérifier : un polynôme construit à partir de la valeur $x$ et des trois familles du QAP doit diviser le polynôme cible.

3. Un protocole cryptographique prend alors en entrée un QAP associé à un programme, génère des clés d'évaluation et de vérification qui utilisent des courbes elliptiques pour cacher les relations polynomiales. Le polynôme prouvant que le calcul a été effectué correctement est alors calculé directement à l'aide des relations cachées dans la courbe elliptique. La relation de divisibilité se traduit uniquement à l'aide d'un nombre constant d'éléments de la courbe elliptique, c'est-à-dire que la preuve est de taille constante. La vérification de cette preuve est extrêmement rapide.

Le protocole permet de plus d'obtenir que des entrées du calcul fournies par le prouveur soient privées : il permet de cacher les valeurs du prouveur dans la réalisation de la preuve en les multipliant par un multiple du polynôme cible, ce qui ne modifie pas le fait que le polynôme « preuve » soit divisible par le polynôme cible.

Ce polynôme « preuve », quand il est caché dans une courbe elliptique constitue un zkSNARK.

Le protocole Pinocchio permet à celui qui réalise la preuve de cacher certaines des entrées du calcul dont il fait la preuve. Dans le présent cas, il s'agit de réaliser le calcul suivant :

Entrée : longueur du document M, vecteur d'initialisation IV
Entrée privée : le document M dont on veut calculer le condensat h(M),

Sortie : h(M) et la preuve $\pi$ que le prouveur connaît bien un document M qui se hache en h(M).

A noter que sont connus des protocoles prévus pour la génération d'une preuve de bon déroulement d'une fonction de hachage, que l'homme du métier pourra directement utiliser même s'ils ne sont pas optimaux. La difficulté est d'obtenir un temps de calcul raisonnable pour réaliser la preuve et des tailles de clés d'évaluation et de vérification qui ne sont pas trop conséquentes.

- le protocole Zerocash (IEEE Security & Privacy 2014) de Ben-Sasson et al., propose la définition d'un circuit arithmétique pour vérifier la fonction de compression de SHA-256 qui comporte environ 30 000 portes multiplicatives. Ceci donne un temps de réalisation de preuve d'environ 5 secondes (par niveau de compression, vérifier la fonction de hachage entière qui comprend de nombreuses itération de la fonction de compression sera nettement plus long), ce qui reste élevé et largement améliorable ;
- le protocole ZKBoo, présenté dans la publication « ZKBoo : faster zero-knowledge for boolean circuits » de Giacomelli, Madsen et Orlandi (Usenix Security 2016) » permet de meilleures performances (preuve en 50 ms, vérification en 70 ms) par itération de la fonction de compression, mais la taille de la preuve est conséquente (800 Ko) d'autant plus qu'elle ne semble avoir été mesurée que sur une application de la fonction de compression.

*Mode de réalisation préféré*

Comme expliqué, le procédé Pinocchio et ses dérivés connus présentent l'inconvénient majeur de nécessiter une puissance de calcul importante du côté de l'exécutant (les moyens de traitement de données 11a de l'équipement 10a du client). Le coût de production de la preuve d'un calcul par ce protocole est supérieur de plusieurs ordres de grandeur à celui du calcul lui-même.

En pratique, on constate que la fonction SHA-256 (et plus précisément sa fonction de compression) comporte de nombreuses opérations bit à bit qui sont mal adaptées à la représentation des calculs utilisée dans le protocole Pinocchio. Une première solution pour accélérer la génération de la preuve est de changer de fonction de hachage, par exemple en utilisant des fonctions de hachage basées sur la somme de sous-ensembles (en anglais « subset sum »), dites également de type arithmétique, car le circuit arithmétique représentant la fonction a moins de portes multiplicatives. Des exemples en sont décrits dans la publication « O. Goldreich, S. Goldwasser, and S. Halevi. Collision-free hashing from lattice problems. Technical report, 1996 ».

Ces fonctions ont été utilisées dans les zkSNARKs et décrites dans la publication « E. Ben-Sasson, A. Chiesa, E. Tromer and M. Virza. Scalable Zero-Knowledge via Cycles of Elliptic Curves. CRYPTO 2014 ».

Toutefois, les fonctions de la famille SHA restent les plus utilisées (car standardisées), et surtout, elles permettent d'obtenir un condensat qui sera utilisé pour produire la signature standard, une fois le protocole terminé, c'est pourquoi il est souhaitable de disposer d'un algorithme qui permette de les utiliser malgré leur mauvaise adaptation à la représentation des calculs utilisée dans le protocole Pinocchio.

Dans un mode de réalisation préférée, le présent procédé s'affranchit ainsi de ces difficultés en permettant comme on va le voir de générer une preuve numérique de petite taille constante (de l'ordre de 300 octets, soit plusieurs milliers de fois moins que pour les protocoles connus) en quelques millièmes de secondes, et sans révéler quoi que ce soit sur le document d'origine, en utilisant des propriétés des fonctions de hachage crryptographiques itérant une fonction de compression suivant le principe de Merkle-Damgård.

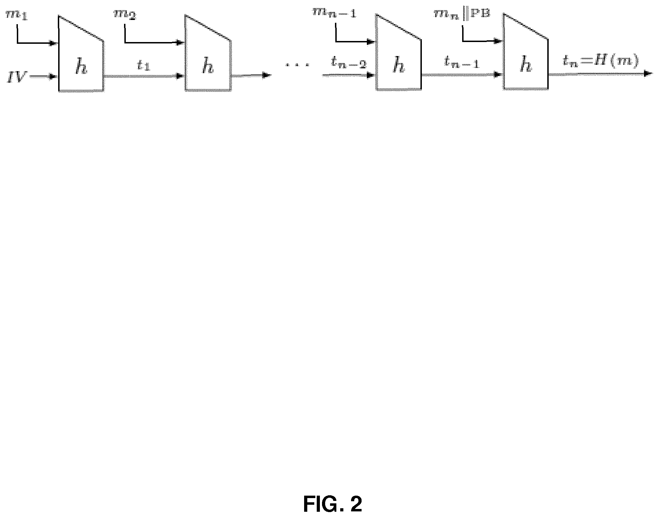

En référence à la **figure 2,** on remarque en effet que pour pouvoir traiter des documents de taille arbitraire, le principe de Merkle-Damgård utilisé par les fonctions de hachage préférées telles que SHA-1 ou SHA-2 consiste à définir la fonction h « de compression » évoquée avant prenant en entrée un message $m_i$ et une variable de chaînage de taille fixe $t_{i-1}$ (avec $t_0$ = *IV* le vecteur d'initialisation) et dont le résultat est un message $t_i$ de taille plus petite que le message initial. Cette fonction h est appelée fonction de compression car elle prend une entrée de M bit et produit à sa sortie une séquence de N bit avec N strictement inférieur à M. Dans le cas de SHA-256 par exemple l'entrée a une taille de 512 bit (i.e. le message est traité bloc par bloc de taille 512 bit) et la fonction de compression produit une valeur de taille 256 bit.

Ensuite la fonction de compression est appliquée récursivement à chaque bloc du message jusqu'à avoir épuisé tous les blocs possibles et obtient in fine $t_n = H(m) = h(h(... h(IV,m_1),m_2), ...,m_n)$. Ce principe étend ainsi le calcul d'un condensat à tout message de taille quelconque (inférieure à $2^{64}$-1 pour SHA-256).

A noter que pour se prémunir contre certaines attaques, le dernier bloc de message $m_n$ est complété par un bloc de bourrage *PB* (en anglais padding bloc), de sorte que l'entrée de la dernière occurrence de *h* est $m_n \parallel PB$. Dans le cas de SHA-256, ce bloc est de taille variable mais au moins égale à 65 bit. Il comporte un champ annonçant la taille du message en bit et un moyen de savoir quand ce bloc est fini.

Une solution pour limiter grandement le temps de génération de la preuve et sa taille lorsque la fonction de hachage applique le principe de Merkle-Damgård est alors d'utiliser une preuve de connaissance d'une pré-image de la fonction de compression (en d'autres termes l'état interne après déjà plusieurs itérations de la fonction *h,* en pratique l'une des valeurs $t_i, i \in [\![ 1; n-1 ]\!]$ , plus spécifiquement la dernière valeur $t_{n-1}$) plutôt que nécessairement le document original, cette preuve montrant aussi la possession du document, à condition que la fonction de hachage ait bien les propriétés cryptographiques qu'on attend d'elle, comme la résistance au calcul de pré-image ou une distribution statistiquement bien répartie dans l'ensemble des valeurs possibles. Plus précisément, au lieu de prouver qu'il connait $\{m_1, m_2, ... m_n\}$, le prouveur peut se contenter de prouver qu'il connait la valeur $t_{n-1}$, car elle permet de vérifier (avec le dernier bloc de message $m_n$) que le résultat obtenu en appliquant une seule itération de la fonction de compression h est égal à la valeur du condensat transmise au vérifieur.

En effet, on peut montrer que les affirmations « étant donné le condensat d'un document original reçu, l'équipement 10a dispose d'un document dont le condensat correspond à celui fourni » et « étant donné le condensat d'un document original reçu, l'équipement 10a dispose d'une pré-image de la fonction de compression de ladite fonction de hachage dont le résultat (application d'une itération de la fonction de compression à ladite pré-image) correspond au condensat fourni » sont sensiblement équivalentes (les deux propositions ont la même difficulté calculatoire).

Pour cela, un mécanisme challenge-réponse est astucieusement utilisé. Plus précisément, en étudiant plus en détail la construction des fonctions de hachages basées sur le schéma de Merkle-Damgård, on peut obtenir un moyen de réaliser la preuve qui nécessite moins de calcul. Pour un nonce $\tau$ (i.e. un nombre arbitraire, c'est-à-dire un aléa, à usage unique, de l'anglais « number used once », qui joue le rôle de challenge), en exprimant la valeur de $H(m)$ et de $H(m \parallel \tau)$ à l'aide de la fonction de compression, on s'aperçoit qu'il y a des quantités communes aux deux expressions. Il suffit alors de prouver que les quantités $H(m)$ et $H(m \parallel \tau)$ sont liées pour prouver que le client a connaissance d'une pré-image de la fonction de hachage et donc du document original.

Dans la plupart des protocoles de calcul vérifiable à visée pratique qui existent, les programmes à vérifier ne doivent pas utiliser de structure de contrôle qui dépend des données. Ceci est problématique dans notre situation car le programme qui calcule le condensat du message doit appliquer la fonction de compression autant de fois qu'il y a de blocs dans le document.

Dans la preuve à produire, il faut appliquer un petit nombre de fois la fonction de compression, entre deux et quatre fois selon la taille du dernier bloc du message. Mais on est encore dans un cas où le programme produisant la preuve comporte des instructions qui ne sont pas fixées avant de connaître le document.

Pour contourner ceci, l'idée est de modifier la longueur du nonce $\tau$ à l'aide de bourrage (on obtient $\tau_{pad}$, qui est comme l'on va voir inclus dans la réponse au challenge) et de produire trois systèmes de preuve qui correspondent aux trois cas possibles listés dans la Table 1 ci-dessous.

TABLE 1 - Relation entre $H(m)$ et $H(m \parallel \tau_{pad})$ selon la taille de $m$

| | Cas n° 1 | Cas n° 2 | Cas n° 3 |
|---|---|---|---|
| $l := len(m_n)$ | $l \leq$ | $447 < l < 512$ | $l = 512$ |
| $H(m)$ | $h(t_{n-1}, m_n \parallel PB_1)$ | $h(h(t_{n-1}, m_n \parallel PB_1), PB_2)$ | $h(t_n, PB_1)$ |
| $\tau_{pad}$ | $\tau_{pad} := 00...0 \parallel \tau$ with $m_n \parallel \tau_{pad} \in \{0,1\}^{512}$ | $\tau_{pad} := PB_1 \parallel \tau$ | $\tau_{pad} := \tau$ |
| $H(m \parallel \tau_{pad})$ | $h(h(t_{n-1}, m_n \parallel \tau_{pad}), PB_2)$ | $h(h(t_{n-1}, m_n \parallel PB_1), \tau \parallel PB_3)$ | $h(t_n, \tau_{pad} \parallel PB_2)$ |

Ces trois cas, basés sur l'exemple de SHA-256, sont liés à l'exigence que le bloc de padding est de taille variable mais au moins égale à 65 bit : si le bloc final $m_n$ a une longueur supérieure à 447 bit (i.e. 512-65) mais supérieure à 512 bit, alors le bloc de padding *PB* devrait faire entre 1 et 64 bit ce qui n'est pas possible. Il est alors divisé en $PB_1$ et $PB_2$ (i.e. $PB = PB_2 \| PB_2$), $PB_1$ complétant $m_n$ et $PB_2$ étant un bloc complet de 512 bit compressé dans une occurrence supplémentaire de *h*.

Ainsi, pour revenir au nonce $\tau$, par exemple dans le cas simple où le document a une longueur qui est un multiple de 512 bit (le dernier bloc a donc une longueur de 512 bit), les expressions dans la Table 1 indiquent que le client doit prouver qu'il connaît une valeur *a* (qui correspond à $t_n$) telle que : $H(m) = h(a, PB_1)$ et $H(m \| \tau) = h(a, \tau \| PB_2)$, avec $PB_1$ d'une longueur de 512 bit et $PB_2$ la longueur pour compléter $\tau$ à 512 bit (ce qui est possible si $\tau$ est court, par exemple 64 bit). Le client produit alors une preuve à divulgation nulle de connaissance en cachant la valeur $t_n$ au signataire.

L'étape (a0) comprend ainsi avantageusement la réception préalable par les moyens de traitement 11a de l'équipement 10a d'un nonce $\tau$ (le challenge, préférentiellement d'une longueur prédéterminée telle que 64 bit), et la génération d'un condensat d'une concaténation du document et du nonce complété par un bloc de bourrage $\tau_{pad}$, qu'on appellera « condensat auxiliaire » par commodité dans la présente description (le condensat du document original sera appelé quant à lui le « condensat principal »). L'idée est ainsi de modifier la longueur du nonce $\tau$ à l'aide de bourrage et de produire trois systèmes de preuve qui correspondent aux trois cas possibles listés dans la Table 1.

Plus précisément :

- Dans le cas 1, est générée par les moyens de traitement de données 11a de l'équipement 10a une preuve à divulgation nulle de connaissances du fait que

$$\exists x \in \{0,1\}^{256}, \exists a, b \in \{0,1\}^{512}, H(m) = h(x,a) \wedge H\big(m \| \tau_{pad}\big) = h(x,b)$$

- Dans le cas 2, est générée par les moyens de traitement de données 11a de l'équipement 10a une preuve à divulgation nulle de connaissances du fait que

$$\exists x \in \{0,1\}^{256}, \exists a, b, c \in \{0,1\}^{512}, H(m) = h(x,a) \wedge H\big(m \| \tau_{pad}\big) = h(h(x,b),c)$$

- Dans le cas 3, est générée par les moyens de traitement de données 11a de l'équipement 10a une preuve à divulgation nulle de connaissances du fait que

$$\exists x \in \{0,1\}^{256}, \exists a, b, c \in \{0,1\}^{512}, H(m) = h(h(x,a),b) \wedge H\big(m \| \tau_{pad}\big)$$
$$= h(h(x,a),c)$$

Même si cette table est conçue pour SHA-256, l'homme du métier saura l'adapter pour d'autres fonctions de hachage construites avec le principe de Merkle-Damgård et déterminer les preuves adéquates à générer.

L'étape (a) comprend alors la réception (par les moyens de traitement 11b du serveur 10b) dudit condensat auxiliaire $H(m \| \tau_{pad})$ (avec la preuve et le condensat principal $H(m)$), et le ledit nonce complété par un bloc de bourrage $\tau_{pad}$. En d'autres termes le client transmet $\tau_{pad}$ et le signataire choisit l'un des trois systèmes de preuve en fonction de $\tau_{pad}$ : si $\tau_{pad}$ fait 64 bit de long on est dans le cas numéro 3, sinon son bit le plus à gauche commence par 0 dans le cas numéro 1 et par 1 dans le cas numéro 2. Les moyens de traitement de données 11b du serveur 10b savent alors quelle proposition vérifier à l'étape (b).

*Résumé du mode de réalisation préféré*

Dans ce mode de réalisation particulièrement préféré, le procédé de génération d'une signature électronique d'un document *m* associé à un condensat $H(m)$ obtenu par une fonction de hachage cryptographique *M* itérant une fonction de compression h suivant le principe de Merkle-Damgård, comprend les étapes suivantes :

(a0) Par les moyens de traitement 11a de l'équipement 10a :

- Réception d'un nonce (le challenge $\tau$) généré et envoyé par le serveur 10b ;
- Génération du nonce complété par un bloc de bourrage (la réponse $\tau_{pad}$), ledit bloc de bourrage étant avantageusement déterminé en fonction de longueurs du nonce $\tau$ et surtout dudit document *m* (préférentiellement selon trois schémas selon la longueur du document) ;
- génération dudit condensat (condensat principal $H(m)$) par application de ladite fonction de hachage donnée *H* audit document *m* ;

- génération d'un condensat d'une concaténation $m \parallel \tau_{pad}$ du document et du nonce complété par le bloc de bourrage (condensat auxiliaire $H(m \parallel \tau_{pad})$) par application de la même fonction de hachage donnée (audit document auquel est concaténé le nonce complété par le bloc de bourrage) ;
- génération d'une preuve à divulgation nulle de connaissances du fait que ledit condensat (principal) est bien le résultat de l'application de ladite fonction de hachage donnée audit document ; ladite preuve étant plus précisément une preuve à divulgation nulle de connaissances du fait que l'équipement 10a dispose d'une pré-image *x* telle que ledit condensat *H*(*m*) est bien

le résultat de l'application d'au moins une itération (en particulier une ou deux) de la fonction de compression *h* à ladite pré-image *x* ; ladite preuve étant plus précisément une preuve à divulgation nulle de connaissances du fait que du fait que le condensat (principal) *H*(*m*) et le condensat (auxiliaire) de la concaténation du document et du nonce complété par le bloc de bourrage $H(m \parallel \tau_{pad})$ sont liés par une relation donnée (portant sur les itérations de la fonction de compression *h*) ; ladite relation donnée entre le condensat *H*(*m*) du document et le condensat $H(m \parallel \tau_{pad})$ de la concaténation du document et du nonce complété par le bloc de bourrage étant préférentiellement déterminée en fonction de la longueur dudit document *H*(*m*). Dans l'exemple de SHA-256, en fonction de cette longueur il y a trois cas selon lesquels la relation est : $\exists a, b, c \in \{0,1\}^{512}$ tels que

○ soit

$$H(m) = h(x, a) \wedge H\big(m \parallel \tau_{pad}\big) = h(x, b)$$

○ soit

$$H(m) = h(x, a) \wedge H\big(m \parallel \tau_{pad}\big) = h(h(x, b), c) \ ;$$

○ soit

$$H(m) = h(h(x, a), b) \wedge H\big(m \parallel \tau_{pad}\big) = h(h(x, a), c) \ ; \ \text{où} \ x$$

est comme expliqué la pré-image (d'une longueur 256 bit) dont on prouve la connaissance ;

- renvoi au serveur 10b du condensat (principal) *H*(*m*), du condensat (auxiliaire) $H(m \parallel \tau_{pad})$ de la concaténation du document et du nonce complété par le bloc de bourrage, du nonce complété par le bloc de bourrage $\tau_{pad}$, et de la preuve ;

   (a) Réception de ces éléments par les moyens de traitement 11b du serveur 10b ;
   (b) détermination par les moyens de traitement 11b du serveur 10b de ladite relation que prouve la preuve en fonction de la valeur reçue du nonce complété par le bloc de bourrage $\tau_{pad}$, et la vérification que ladite preuve à divulgation nulle de connaissances est valide en conséquence (connaissant la relation) ;
   (c) génération d'une signature électronique du document à partir dudit condensat (principal) *H*(*m*), si la preuve a bien été vérifiée et validée, et le cas échéant renvoi à l'équipement 10a de la signature de sorte à ce qu'elle produise le document signé, i.e. le document original avec sa signature attachée.

*Produit programme d'ordinateur*

Selon un deuxième et un troisième aspects, l'invention concerne un produit programme d'ordinateur comprenant des instructions de code pour l'exécution (en particulier sur les moyens de traitement de données 11a, 11b de l'équipement 10a et/ou du serveur 10b) d'un procédé selon le premier aspect de l'invention de génération d'une signature électronique d'un document associé à un condensat, ainsi que des moyens de stockage lisibles par un équipement informatique (une mémoire de l'équipement 10a ou du deuxième serveur 10b) sur lequel on trouve ce produit programme d'ordinateur.

**Revendications**

1. Procédé de génération d'une signature électronique d'un document associé à un condensat obtenu par une fonction de hachage donnée comprenant les étapes de :

   (a) Réception par des moyens de traitement de données (11b) d'un serveur (10b) dudit condensat et d'une preuve à divulgation nulle de connaissances du fait que ledit condensat est bien le résultat de l'application par des moyens de traitement de données (11a) d'un équipement (10a) de ladite fonction de hachage donnée audit document

   ladite fonction de hachage donnée étant une fonction de hachage cryptographique itérant une fonction de compression suivant le principe de Merkle-Damgård et ladite preuve à divulgation nulle de connaissances du fait que ledit condensat est bien le résultat de l'application de ladite fonction de hachage donnée audit document étant une preuve à divulgation nulle de connaissances générée par les moyens de traitement de données (11a) de l'équipement (10a) du fait que l'équipement (10a) dispose d'une pré-image de la fonction de compression telle que ledit condensat est bien le résultat de l'application d'une itération de la fonction de compression à ladite pré-image ;

   (b) Vérification par les moyens de traitement de données (11b) du serveur (10b) que ladite preuve à divulgation nulle de connaissances est valide ;

   (c) génération par les moyens de traitement de données (11b) du serveur (10b) d'une signature électronique du document à partir dudit condensat.

2. Procédé selon la revendication 1, dans lequel l'étape (c) comprend l'application au condensat d'une fonction paramétrée par une clé privée d'un émetteur du document.

3. Procédé selon l'une des revendications 1 et 2, dans lequel la preuve à divulgation nulle de connaissances est un objet cryptographique de type zkSNARK.

4. Procédé selon l'une des revendications 1 à 3, dans lequel ladite fonction de hachage donnée est choisie parmi les fonctions des familles SHA-1 ou SHA-2.

5. Procédé selon l'une des revendications 1 à 4, comprenant une étape préalable (a0) pour la génération, par les moyens de traitement de données (11a) de l' équipement (10a) disposant dudit document, de ladite preuve à divulgation nulle de connaissances du fait que ledit condensat est bien le résultat de l'application de ladite fonction de hachage donnée audit document.

6. Procédé selon la revendication 5, dans laquelle l'étape (a0) comprend en outre la génération préalable dudit condensat par application de ladite fonction de hachage donnée audit document.

7. Procédé selon l'une des revendications 5 et 6, dans lequel l'étape (c) comprend la transmission de la signature électronique générée auxdits moyens de traitement de données (11a) de l'équipement (10a).

8. Procédé selon la revendication 7, comprenant une étape subséquente (d) d'association par les moyens de traitement de données (11a) de l'équipement (1Da) de la signature électronique au document de sorte à former le document signé.

9. Procédé selon l'une des revendications 5 à 8, dans lequel l'étape (a0) comprend la réception préalable par les moyens de traitement (11a) de l'équipement (10a) d'un nonce, et la génération d'un condensat d'une concaténation du document et du nonce complété par un bloc de bourrage.

10. Procédé selon la revendication 9 dans lequel l'étape (a) comprend la réception du nonce complété par un bloc de bourrage, et dudit condensat d'une concaténation du document et du nonce complété par le bloc de bourrage.

11. Procédé selon la revendication 10, dans lequel ladite preuve à divulgation nulle de connaissances du fait que l'équipement 10a dispose d'une pré-image de la fonction de compression telle que ledit condensat est bien le résultat de l'application d'une itération de la fonction de compression à ladite pré-image, est une preuve à divulgation nulle de connaissances du fait que le condensat du document et le condensat de la concaténation du document et du nonce complété par le bloc de bourrage sont liés par une relation donnée.

**12.** Procédé selon la revendication 11, dans laquelle ladite relation donnée entre le condensat du document et le condensat de la concaténation du document et du nonce complété par le bloc de bourrage est choisie parmi une pluralité de relations prédéterminées, l'étape (b) comprenant la détermination de ladite relation en fonction de la valeur reçue du nonce complété par le bloc de bourrage, et la vérification de la preuve en conséquence.

**13.** Procédé selon la revendication 12, dans laquelle l'étape (a0) comprend la détermination du bloc de bourrage complétant le nonce et le choix de ladite relation donnée entre le condensat du document et le condensat de la concaténation du document et du nonce complété par le bloc de bourrage, en fonction de longueurs dudit document et/ou du nonce.

**14.** Produit programme d'ordinateur comprenant des instructions de code pour l'exécution d'un procédé selon l'une des revendications 1 à 13 de génération d'une signature électronique d'un document associé à un condensat.

**15.** Moyen de stockage lisible par un équipement informatique sur lequel un produit programme d'ordinateur comprend des instructions de code pour l'exécution d'un procédé selon l'une des revendications 1 à 13 de génération d'une signature électronique d'un document associé à un condensat.


**Patentansprüche**

**1.** Verfahren zur Erzeugung einer elektronischen Signatur eines Dokuments, das einem Digest zugeordnet ist, das durch eine bestimmte Hash-Funktion erhalten wird, umfassend die Schritte:

(a) Empfangen, durch Datenverarbeitungsmittel (11b) eines Servers (10b), des Digests und eines Null-Wissen-Beweises dafür, dass der Digest tatsächlich das Ergebnis der Anwendung der bestimmten Hash-Funktion auf das Dokument durch Datenverarbeitungsmittel (11a) eines Geräts (10a) ist, wobei die bestimmte Hash-Funktion eine kryptographische Hash-Funktion ist, die eine Komprimierungsfunktion nach dem Merkle-Damgård-Prinzip iteriert, und der Null-Wissen-Beweis dafür, dass der Digest tatsächlich das Ergebnis der Anwendung der bestimmten Hash-Funktion auf das Dokument ist, ein Null-Wissen-Beweis ist, der von den Datenverarbeitungsmitteln (11a) des Geräts (10a) aufgrund der Tatsache erzeugt wird, dass das Gerät (10a) über ein Urbild der Komprimierungsfunktion verfügt, so dass der Digest tatsächlich das Ergebnis der Anwendung einer Iteration der Komprimierungsfunktion auf das Urbild ist;
(b) Überprüfen, durch die Datenverarbeitungsmittel (11b) des Servers (10b), dass der Null-Wissen-Beweis gültig ist;
(c) Erzeugen, durch die Datenverarbeitungsmittel (11b) des Servers (10b), einer elektronischen Signatur des Dokuments anhand des Digests.

**2.** Verfahren nach Anspruch 1, wobei der Schritt (c) das Anwenden einer Funktion, die von einem privaten Schlüssel eines Senders des Dokuments parametriert wird, auf den Digest umfasst.

**3.** Verfahren nach einem der Ansprüche 1 und 2, wobei der Null-Wissen-Beweis ein kryptographisches Objekt vom Typ zkSNARK ist.

**4.** Verfahren nach einem der Ansprüche 1 bis 3, wobei die bestimmte Hash-Funktion aus den Funktionen der SHA-1- oder SHA-2-Familien gewählt ist.

**5.** Verfahren nach einem der Ansprüche 1 bis 4, umfassend einen vorhergehenden Schritt (a0) für die Erzeugung, durch die Datenverarbeitungsmittel (11a) des Geräts (10a), das über das Dokument verfügt, des Null-Wissen-Beweises dafür, dass der Digest tatsächlich das Ergebnis der Anwendung der bestimmten Hash-Funktion auf das Dokument ist.

**6.** Verfahren nach Anspruch 5, wobei der Schritt (a0) ferner das vorhergehende Erzeugen des Digests durch Anwendung der bestimmten Hash-Funktion auf das Dokument umfasst.

**7.** Verfahren nach einem der Ansprüche 5 und 6, wobei der Schritt (c) das Übertragen der erzeugten elektronischen Signatur an die Datenverarbeitungsmittel (11a) des Geräts (10a) umfasst.

**8.** Verfahren nach Anspruch 7, umfassend einen Schritt (d) des Zuordnens, durch die Datenverarbeitungsmittel (11a) des Geräts (10a), der elektronischen Signatur dem Dokument, um das signierte Dokument zu bilden.

9. Verfahren nach einem der Ansprüche 5 bis 8, wobei der Schritt (a0) das vorhergehende Empfangen einer Nonce durch die Verarbeitungsmittel (11a) des Geräts (10a) und das Erzeugen eines Digests einer Verkettung des Dokuments und der Nonce, die durch einen Dummy-Block ergänzt ist, umfasst.

10. Verfahren nach Anspruch 9, wobei der Schritt (a) das Empfangen der Nonce, die durch einen Dummy-Block ergänzt ist, und des Digests einer Verkettung des Dokuments und der Nonce, die durch den Dummy-Block ergänzt ist, umfasst.

11. Verfahren nach Anspruch 10, wobei der Null-Wissen-Beweis dafür, dass das Gerät 10a über ein Urbild der Komprimierungsfunktion verfügt, so dass der Digest tatsächlich das Ergebnis der Anwendung einer Iteration der Komprimierungsfunktion auf das Urbild ist, ein Null-Wissen-Beweis dafür ist, dass der Digest des Dokuments und der Digest der Verkettung des Dokuments und der Nonce, die durch den Dummy-Block ergänzt ist, durch ein bestimmtes Verhältnis verbunden sind.

12. Verfahren nach Anspruch 11, wobei das bestimmte Verhältnis zwischen dem Digest des Dokuments und dem Digest der Verkettung des Dokuments und der Nonce, die durch den Dummy-Block ergänzt ist, aus einer Mehrzahl von vorbestimmten Verhältnissen gewählt ist, wobei der Schritt (b) das Bestimmen des Verhältnisses in Abhängigkeit von dem empfangenen Wert der Nonce, die durch den Dummy-Block ergänzt ist, und das entsprechende Überprüfen des Beweises umfasst.

13. Verfahren nach Anspruch 12, wobei der Schritt (a0) das Bestimmen des Dummy-Blocks, der die Nonce ergänzt, und das Wählen des bestimmten Verhältnisses zwischen dem Digest des Dokuments und dem Digest der Verkettung des Dokuments und der Nonce, die durch den Dummy-Block ergänzt ist, in Abhängigkeit von Längen des Dokuments und/oder der Nonce umfasst.

14. Computerprogrammprodukt umfassend Code-Anweisungen für die Ausführung eines Verfahrens nach einem der Ansprüche 1 bis 13 zur Erzeugung einer elektronischen Signatur eines Dokuments, das einem Digest zugeordnet ist.

15. Speichermittel, das von einem Computergerät gelesen werden kann, auf dem ein Computerprogrammprodukt Code-Anweisungen für die Ausführung eines Verfahrens nach einem der Ansprüche 1 bis 13 zur Erzeugung einer elektronischen Signatur eines Dokuments, das einem Digest zugeordnet ist, umfasst.

## Claims

1. Method for generating an electronic signature of a document combined with a digest obtained by a given hash function, comprising the steps of:

   (a) data processing means (11b) of a server (10b) receiving said digest and a zero-knowledge proof that said digest is indeed the result of data processing means (11a) of an item of equipment (10a) applying said given hash function to said document, said given hash function being a cryptographic hash function iterating a compression function following the Merkle-Damgård principle and said zero-knowledge proof that said digest is indeed the result of applying said given hash function to said document being a zero-knowledge proof, generated by the data processing means (11a) of the item of equipment (10a), that the item of equipment (10a) has a preimage of the compression function such that said digest is indeed the result of applying an iteration of the compression function to said preimage;
   (b) the data processing means (11b) of the server (10b) checking that said zero-knowledge proof is valid;
   (c) the data processing means (11b) of the server (10b) generating an electronic signature of the document on the basis of said digest.

2. Method according to Claim 1, in which step (c) comprises applying, to the digest, a function parametrized by a private key of an issuer of the document.

3. Method according to one of Claims 1 and 2, in which the zero-knowledge proof is a cryptographic object of zkSNARK type.

**4.** Method according to one of Claims 1 to 3, in which said given hash function is chosen from among the functions of the SHA-1 and SHA-2 families.

**5.** Method according to one of Claims 1 to 4, comprising a previous step (a0) of the data processing means (11a) of the item of equipment (10a) having said document generating said zero-knowledge proof that said digest is indeed the result of applying said given hash function to said document.

**6.** Method according to Claim 5, in which step (a0) further comprises previously generating said digest by applying said given hash function to said document.

**7.** Method according to one of Claims 5 and 6, in which step (c) comprises transmitting the generated electronic signature to said data processing means (11a) of the item of equipment (10a).

**8.** Method according to Claim 7, comprising a subsequent step (d) of the data processing means (11a) of the item of equipment (10a) combining the electronic signature with the document so as to form the signed document.

**9.** Method according to one of Claims 5 to 8, in which step (a0) comprises the processing means (11a) of the item of equipment (10a) previously receiving a nonce, and generating a digest of a concatenation of the document and of the nonce supplemented by a padding block.

**10.** Method according to Claim 9, in which step (a) comprises receiving the nonce supplemented by a padding block, and said digest of a concatenation of the document and of the nonce supplemented by the padding block.

**11.** Method according to Claim 10, in which said zero-knowledge proof that the item of equipment (10a) has a preimage of the compression function such that said digest is indeed the result of applying an iteration of the compression function to said preimage is a zero-knowledge proof that the digest of the document and the digest of the concatenation of the document and of the nonce supplemented by the padding block are linked by a given relationship.

**12.** Method according to Claim 11, in which said given relationship between the digest of the document and the digest of the concatenation of the document and of the nonce supplemented by the padding block is chosen from among a plurality of predetermined relationships, step (b) comprising determining said relationship depending on the received value of the nonce supplemented by the padding block, and checking the proof accordingly.

**13.** Method according to Claim 12, in which step (a0) comprises determining the padding block supplementing the nonce and choosing said given relationship between the digest of the document and the digest of the concatenation of the document and of the nonce supplemented by the padding block, depending on lengths of said document and/or of the nonce.

**14.** Computer program product comprising code instructions for executing a method, according to one of Claims 1 to 13, for generating an electronic signature of a document combined with a digest.

**15.** Storage medium which can be read by an item of computer equipment on which a computer program product comprises code instructions for executing a method, according to one of Claims 1 to 13, for generating an electronic signature of a document combined with a digest.

**FIG. 1**

**FIG. 2**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Online subscriptions with anonymous access. **MARINA BLANTON.** Proceedings of the 2008 ACM Symposium on Information, Computer and Communications Security, ASIACCS '08. ACM Press, 18 Mars 2008, 217-227
- Pinocchio: Nearly Practical Vérifiable Computation. **BRYAN PARNO ; CRAIG GENTRY ; JON HOWELL ; MARIANA RAYKOVA.** Proceedings of the IEEE Symposium on Security and Privacy. IEEE, 21 Mai 2013
- Geppetto: Versatile Vérifiable Computation. **CRAIG COSTELLO ; CEDRIC FOURNET ; JON HOWELL ; MARKULF KOHLWEISS ; BENJAMIN KREUTER ; MICHAEL NAEHRIG ; BRYAN PARNO ; SAMEE ZAHUR.** Proceedings of the IEEE Symposium on Security and Privacy. IEEE, 18 Mai 2015

- **ELI BEN-SASSON ; ALESSANDRO CHIESA ; DANIEL GENKIN ; ERAN TROMER ; MADARS VIRZA.** SNARKs for C: Verifying Program Executions Succinctly and in Zéro Knowledge. *Proceedings of the 33rd Annual International Cryptology Conférence, CRYPTO '13,* 2013, 90-108
- **BEN-SASSON.** *IEEE Security & Privacy,* 2014
- **GIACOMELLI, MADSEN ; ORLANDI.** ZKBoo : faster zero-knowledge for boolean circuits. *Usenix Security,* 2016
- **O. GOLDREICH ; S. GOLDWASSER ; S. HALEVI.** Collision-free hashing from lattice problems. *Technical report,* 1996
- **E. BEN-SASSON ; A. CHIESA ; E. TROMER ; M. VIRZA.** Scalable Zero-Knowledge via Cycles of Elliptic Curves. *CRYPTO 2014*